(19) Europäisches Patentamt
European Patent Office
Office européen des brevets

(11) **EP 4 488 725 A1**

(12) **EUROPEAN PATENT APPLICATION**

(43) Date of publication:
**08.01.2025  Bulletin 2025/02**

(21) Application number: **24181064.7**

(22) Date of filing: **10.06.2024**

(51) International Patent Classification (IPC):
***G02B 1/118*** (2015.01)

(52) Cooperative Patent Classification (CPC):
**G02B 1/118**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.06.2023  US 202363524158 P**

(71) Applicant: **Largan Precision Co. Ltd.
Taichung City, R.O.C. (TW)**

(72) Inventors:
• **HSU, Shih-Jung
Taichung City, R.O.C. (TW)**

• **FAN, Chen Wei
Taichung City, R.O.C. (TW)**
• **TSAI, Wen-Yu
Taichung City, R.O.C. (TW)**
• **CHOU, Ming-Ta
Taichung City, R.O.C. (TW)**

(74) Representative: **dompatent von Kreisler Selting Werner -
Partnerschaft von Patent- und Rechtsanwälten mbB
Deichmannhaus am Dom
Bahnhofsvorplatz 1
50667 Köln (DE)**

(54) **OPTICAL COMPONENT, IMAGING LENS AND ELECTRONIC DEVICE**

(57)     An optical component (10) includes a substrate (100) and a low reflection layer (101). The low reflection layer (101) is disposed on a surface (S1) of the substrate (100), and the low reflection layer (101) includes a plurality of nanoparticles (1010). The nanoparticles (1010) are arranged in a stack configuration, and the number of the nanoparticles (1010) decreases progressively in a direction away from the substrate (100), such that an effective refractive index of the low reflection layer (101) decreases progressively in the direction away from the substrate (100) so as to prevent total reflection of light at the interface, thereby reducing reflectivity. When specific conditions are satisfied, the stacked nanoparticles (1010) can form a gradient-index film layer, and the low reflection layer (101) can provide better anti-reflection capability.

FIG. 3

EP 4 488 725 A1

**Description**

**BACKGROUND**

Technical Field

The present disclosure relates to an optical component, imaging lens and an electronic device, more particularly to an optical component and an imaging lens applicable to an electronic device.

Description of Related Art

With the development of semiconductor manufacturing technology, the performance of image sensors has been improved, and the pixel size thereof has been scaled down. Therefore, featuring high image quality becomes one of the indispensable features of an optical system nowadays. Furthermore, due to the rapid changes in technology, electronic devices equipped with optical systems are trending towards multi-functionality for various applications, and therefore the functionality requirements for the optical systems have been increasing.

In recent years, the trend of using mobile devices with miniature optical lenses for photography has been growing. However, when these mobile devices are used outdoors, they are often affected by strong sunlight, causing the optical lenses to be affected by intense non-imaging stray light. Particularly, non-imaging rays tend to be reflected in the optical lenses, thus significantly reducing the image quality.

Conventionally, in optical technology, various techniques such as ink spraying, sandblasting, and coating are used on the surfaces of opaque optical components in the optical lens to reduce reflection and eliminate stray light. Although these methods can improve the optical imaging quality, they are still insufficient in eliminating high-intensity stray light. Furthermore, in the field of non-mobile device optical lenses, there are other techniques for reducing reflection. These techniques involve creating a surface with a porous microstructure by manufacturing thin films. However, the structural support of these films is inadequate, and they are prone to deformation due to external forces, thereby significantly reducing their anti-reflection effectiveness. Therefore, improving the internal structure of optical lens components to reduce the reflection intensity of non-imaging rays so as to meet the high-quality demands of electronic devices nowadays has become an important issue in the relevant field.

**SUMMARY**

According to one aspect of the present disclosure, an optical component includes a substrate and a low reflection layer. The low reflection layer is disposed on a surface of the substrate, and the low reflection layer includes a plurality of nanoparticles. The plurality of nanoparticles are arranged in a stack configuration, and the number of the plurality of nanoparticles decreases progressively in a direction away from the substrate. In addition, when an average particle diameter of the plurality of nanoparticles is $\varphi_{avg}$, the following condition is preferably satisfied: $50 \text{ nm} < \varphi_{avg} < 185 \text{ nm}$. Moreover, a scanning electron microscope is used to capture an image of the low reflection layer from a top view perspective, and the scanning electron microscope captures an area preferably ranging from 2 $\mu m^2$ to 200 $\mu m^2$ of the low reflection layer. When the number of pixels in the image with grayscale values ranging from 100 to 150 is G1015, and the number of pixels in the image with grayscale values ranging from 200 to 250 is G2025, the following condition is preferably satisfied: $3 < G1015/G2025 < 40$.

According to another aspect of the present disclosure, an optical component includes a substrate and a low reflection layer. The low reflection layer is disposed on a surface of the substrate, and the low reflection layer includes a plurality of nanoparticles. The plurality of nanoparticles are arranged in a stack configuration, and the number of the plurality of nanoparticles decreases progressively in a direction away from the substrate. In addition, a scanning electron microscope is used to capture an image of the low reflection layer from a top view perspective, and the scanning electron microscope captures an area preferably ranging from 1 $\mu m^2$ to 2000 $\mu m^2$ of the low reflection layer. When the number of pixels in the image with grayscale values ranging from 100 to 150 is G1015, and the number of pixels in the image with grayscale values ranging from 200 to 250 is G2025, the following condition is preferably satisfied: $3 < G1015/G2025 < 40$.

According to another aspect of the present disclosure, an imaging lens includes one of the aforementioned optical components. An optical axis of the imaging lens passes through the optical component.

According to another aspect of the present disclosure, an electronic device includes the aforementioned imaging lens and an image sensor. The image sensor is disposed on an image surface of the imaging lens.

**BRIEF DESCRIPTION OF THE DRAWINGS**

The disclosure can be better understood by reading the following detailed description of the embodiments, with reference made to the accompanying drawings as follows:

Fig. 1 is a perspective view of an imaging lens according to the 1st embodiment of the present disclosure;
Fig. 2 is an exploded view of the imaging lens in Fig. 1;
Fig. 3 is another perspective view of the imaging lens in Fig. 1, as well as a partially enlarged view of the perspective view;
Fig. 4 is a cross-sectional view of the imaging lens in Fig. 1, as well as a partially enlarged view of the cross-sectional view;
Fig. 5 is a perspective view of an optical component of an imaging lens according to another configuration of the present disclosure;
Fig. 6 is a perspective view of an optical component of an imaging lens according to another configuration of the present disclosure;
Fig. 7 is a perspective view of an imaging lens according to the 2nd embodiment of the present disclosure;
Fig. 8 is a cross-sectional view of the imaging lens in Fig. 7;
Fig. 9 is a perspective view of an imaging lens according to the 3rd embodiment of the present disclosure;
Fig. 10 is a cross-sectional view of the imaging lens in Fig. 9;
Fig. 11 is one perspective view of an electronic device according to the 4th embodiment of the present disclosure;
Fig. 12 is another perspective view of the electronic device in Fig. 11;
Fig. 13 is an image captured by an ultra-wide-angle imaging lens;
Fig. 14 is an image captured by a high pixel imaging lens;
Fig. 15 is an image captured by a telephoto imaging lens;
Fig. 16 is a perspective view of an electronic device according to the 5th embodiment of the present disclosure;
Fig. 17 is a perspective view of an electronic device according to the 6th embodiment of the present disclosure;
Fig. 18 is a side view of the electronic device in Fig. 17;
Fig. 19 is a top view of the electronic device in Fig. 17;
Fig. 20 shows an image of 4.9 $\mu m^2$ of a low reflection layer taken by a scanning electron microscope from a top view perspective according to one configuration of the present disclosure;
Fig. 21 is a grayscale distribution chart showing the number of pixels with different grayscale values in the image captured in Fig. 20;
Fig. 22 shows an image of 19.76 $\mu m^2$ of the same low reflection layer as in Fig. 20 taken by the scanning electron microscope from a top view perspective;
Fig. 23 is a grayscale distribution chart showing the number of pixels with different grayscale values in the image captured in Fig. 22;
Fig. 24 shows an image of 123.62 $\mu m^2$ of the same low reflection layer as in Fig. 20 taken by the scanning electron microscope from a top view perspective;
Fig. 25 is a grayscale distribution chart showing the number of pixels with different grayscale values in the image captured in Fig. 24;
Fig. 26 shows an image of 492.5 $\mu m^2$ of the same low reflection layer as in Fig. 20 taken by the scanning electron microscope from a top view perspective;
Fig. 27 is a grayscale distribution chart showing the number of pixels with different grayscale values in the image captured in Fig. 26;
Fig. 28 shows an image of 1961 $\mu m^2$ of the same low reflection layer as in Fig. 20 taken by the scanning electron microscope from a top view perspective;
Fig. 29 is a grayscale distribution chart showing the number of pixels with different grayscale values in the image captured in Fig. 28;
Fig. 30 is a partial side view of a barrel of the imaging lens in Fig. 1, with an adhesive attached thereto;
Fig. 31 is a partial top view of Fig. 30;
Fig. 32 is a partial side view of a barrel without a hydrophobic layer, with an adhesive attached thereto; and
Fig. 33 is a partial top view of Fig. 32.

## DETAILED DESCRIPTION

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

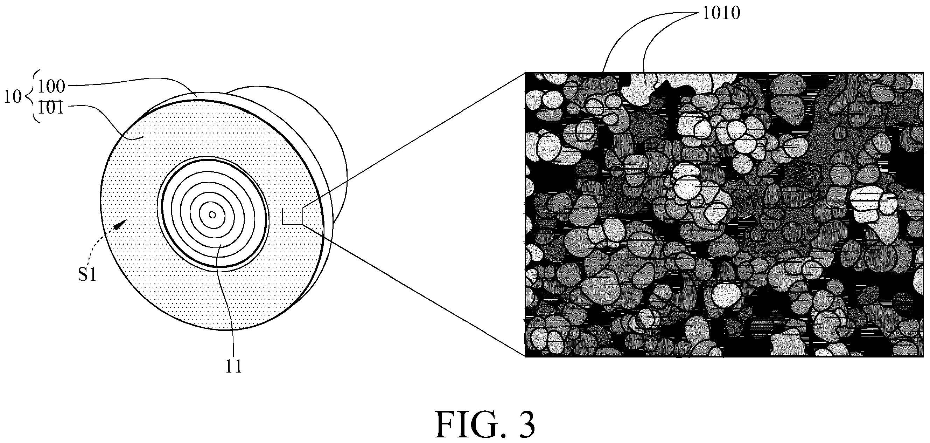

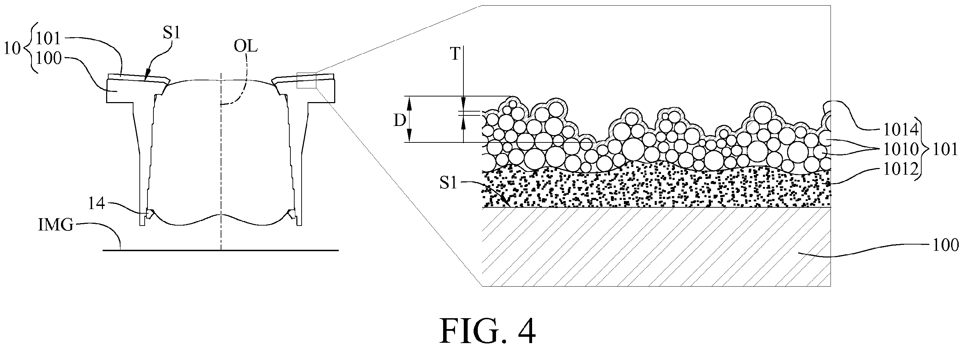

The present disclosure provides an optical component. The optical component includes a substrate and a low reflection layer. The low reflection layer is disposed on a surface of the substrate, and the low reflection layer includes a plurality of nanoparticles. The nanoparticles are arranged in a stack configuration, and the number of the nanoparticles decreases progressively in a direction away from the substrate. Therefore, by stacking the nanoparticles on the substrate in a way that reduces the quantity of nanoparticles farther away from the substrate, the effective refractive index of the low reflection layer decreases gradually in the direction away from the substrate, such that total internal reflection at the interface is prevented and reflectivity is reduced. Please refer to Fig. 3 and Fig. 4, where Fig. 3 shows a partially enlarged front view of a low reflection layer 101 according to the 1st embodiment of the present disclosure, and Fig. 4 shows a cross-sectional view of a stack configuration of nanoparticles 1010 of the low reflection layer 101 according to the 1st embodiment of the present disclosure. Said the number of the nanoparticles decreasing progressively in the direction away from the substrate can refer to stacking the nanoparticles in a multi-layered structure, where the number of particles in each layer decreases in the direction away from the substrate. As such, the nanoparticles may form multiple tapered structures on one side farther away from the substrate. In the partially enlarged view of Fig. 3, brighter areas represent higher surface heights, and darker areas represent lower surface heights. Fig. 3 and Fig. 4 are intended for illustrative purposes only, and a film thickness of the low reflection layer, size of the nanoparticles, and shape of the nanoparticles may not be drawn to scale.

A scanning electron microscope is used to capture an image of the low reflection layer from a top view perspective, and the scanning electron microscope captures an area ranging from 1 $\mu m^2$ to 2000 $\mu m^2$ of the low reflection layer; therefore, it is favorable for clearly identifying the nanoparticles. Moreover, the scanning electron microscope can capture an area ranging from 2 $\mu m^2$ to 200 $\mu m^2$ of the low reflection layer. Moreover, the scanning electron microscope can capture an area ranging from 4 $\mu m^2$ to 130 $\mu m^2$ of the low reflection layer; therefore, a preferable range of image capture area is favorable for better identifying the nanoparticles. Moreover, a secondary electron image (SEI) can be used in the scanning electron microscope (SEM) for providing more detailed surface morphology information. In addition, during an imaging process, it is essential to increase the image brightness as much as possible to clearly distinguish the nanoparticles. However, at the same time, excessive brightness saturation in areas where some of the nanoparticles are present should be avoided. In specific, the grayscale value of the brightest nanoparticles in the image approximates 250.

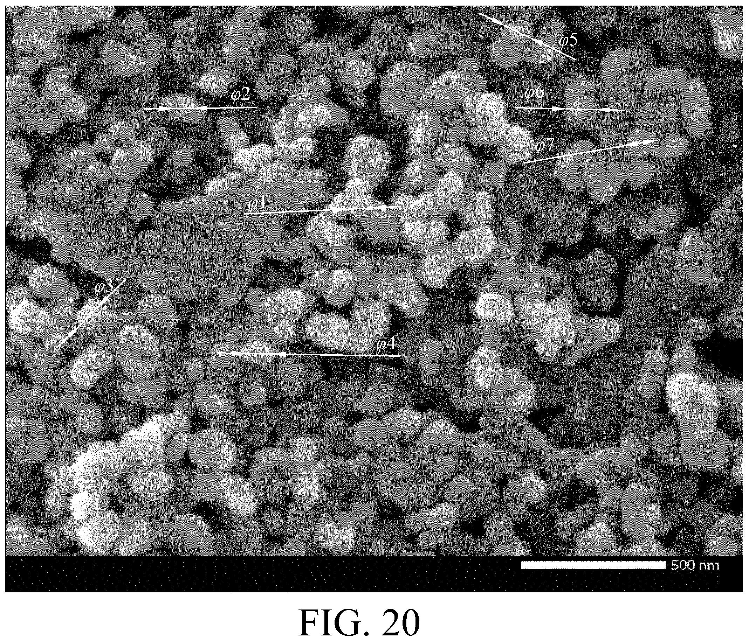

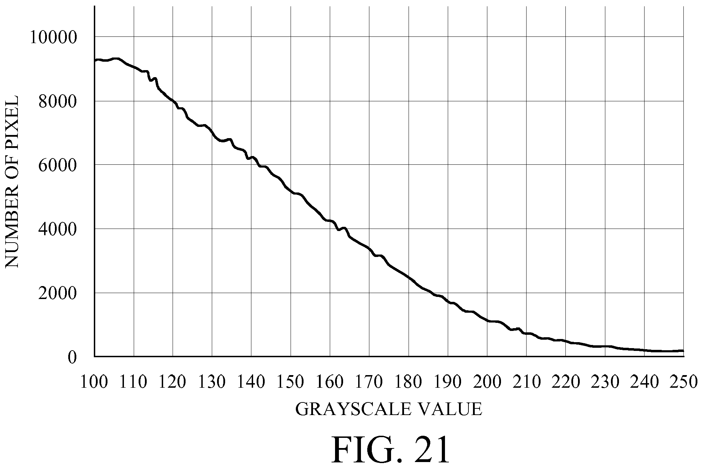

Please refer to Fig. 20 and Fig. 21, where Fig. 20 shows an image of 4.9 $\mu m^2$ of a low reflection layer taken by a scanning electron microscope from a top view perspective according to one configuration of the present disclosure, and Fig. 21 is a grayscale distribution chart showing the number of pixels with different grayscale values in the image captured in Fig. 20. As seen in Fig. 20, the granular nanoparticles are stacked on one another, such that the low reflection layer has variations in height. Moreover, some larger nanoparticles can have hollow structures, and some adjacent nanoparticles can merge together, such that the nanoparticles can be stacked more stably. The bit depth of the images captured by the scanning electron microscope is 8 bits, with grayscale values ranging from 0 (black) to 255 (white). The nanoparticles closer to the top portion appear brighter, and thus their grayscale values are higher. Therefore, by means of image analysis, it can be confirmed that the number of the nanoparticles in the low reflection layer decreases progressively in the direction away from the substrate. Moreover, if an original image has a different bit depth, such as 10 bits or 16 bits, the bit depth should be converted to 8 bits before conducting an image analysis. Moreover, the image analysis is performed using the original images captured by the scanning electron microscope, and these images are not subjected to any post-processing, such as adjusting brightness or contrast, which would alter the image information.

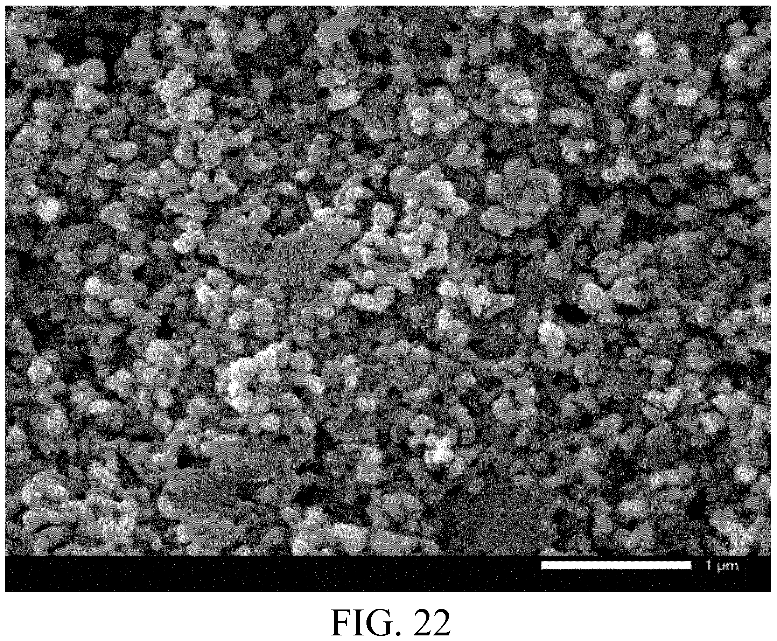

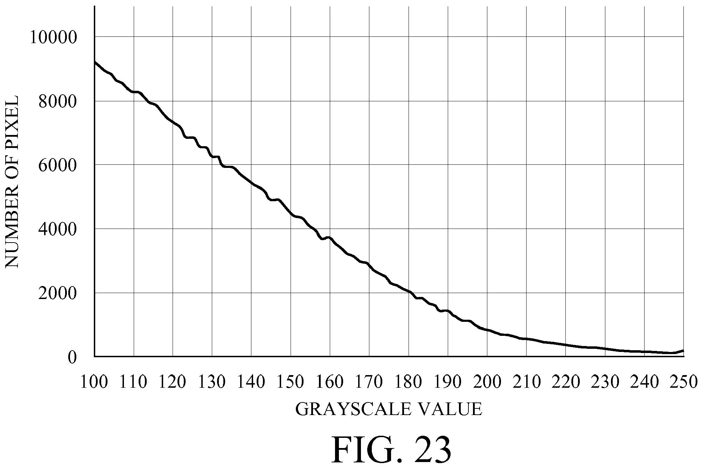

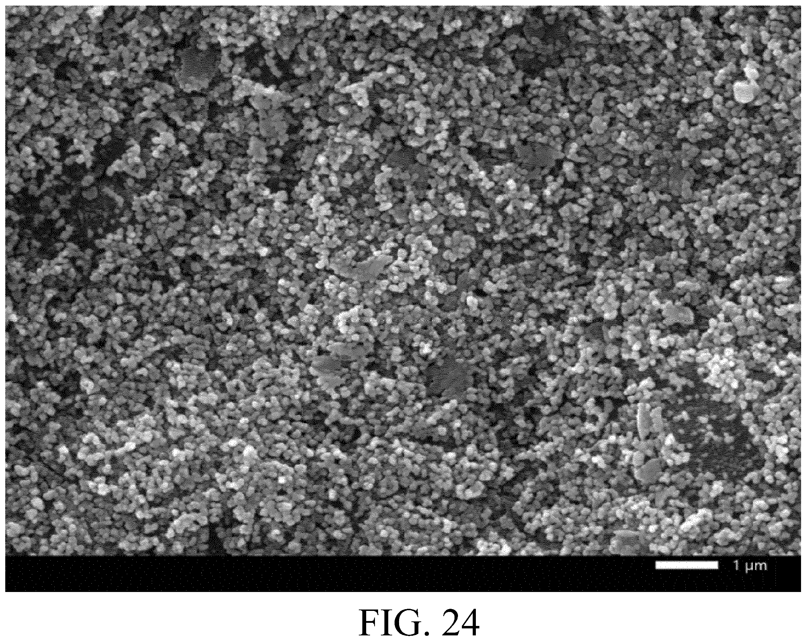

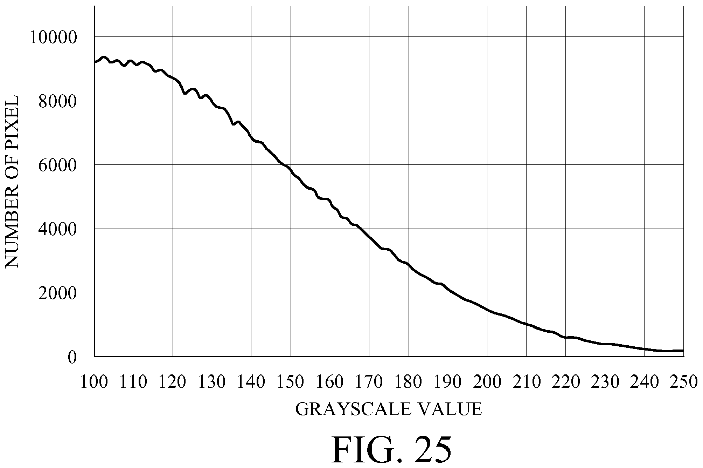

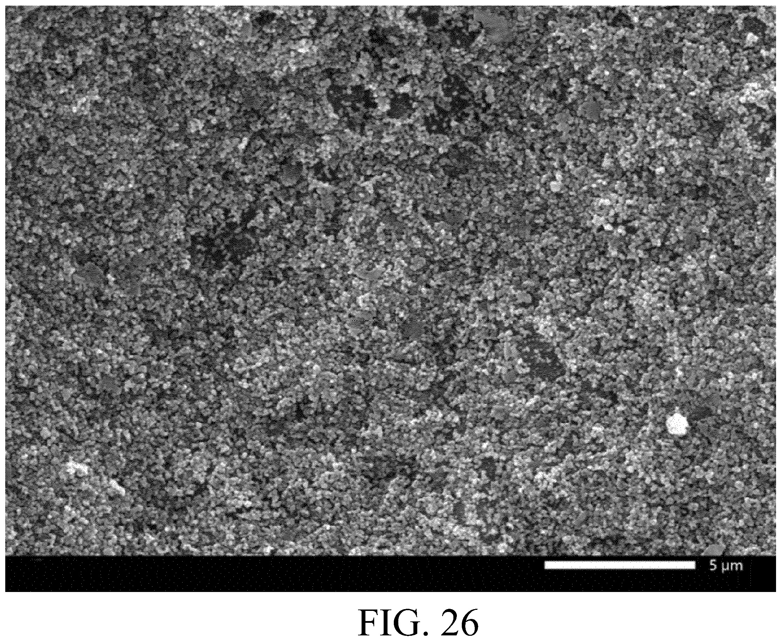

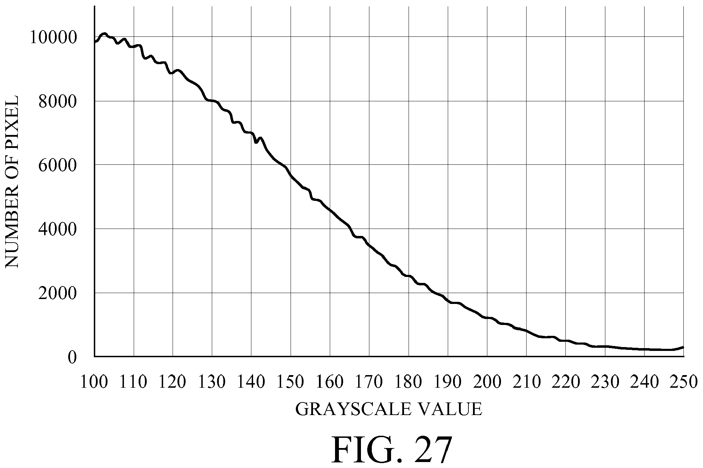

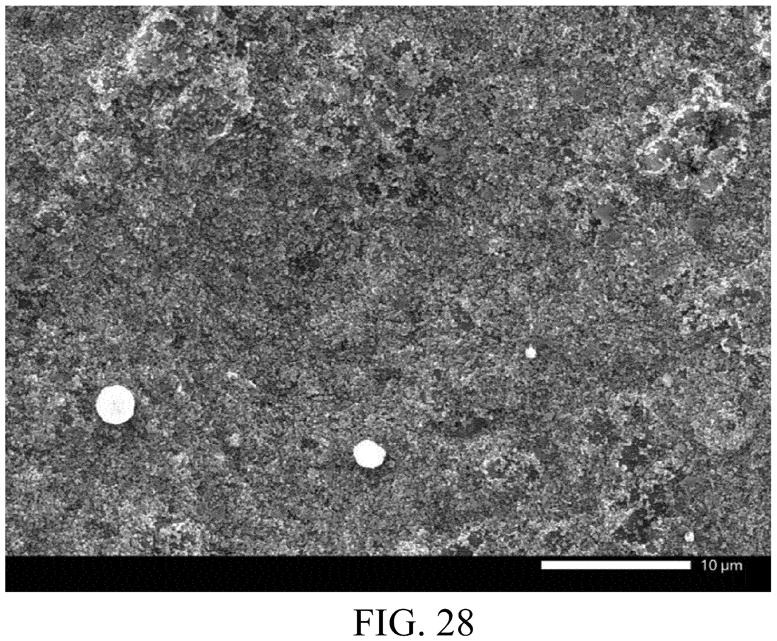

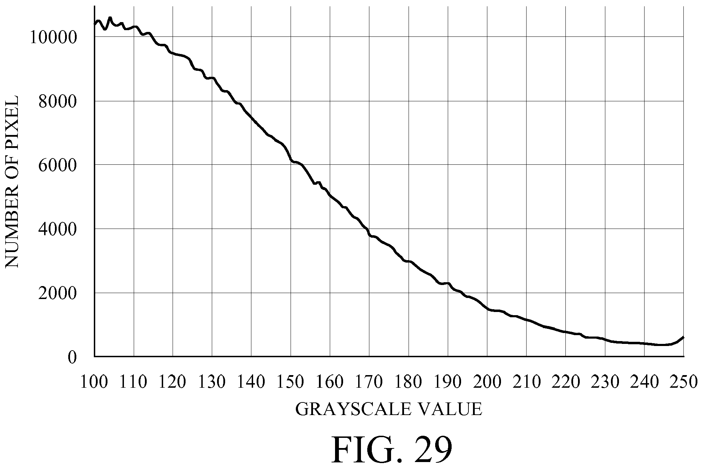

When the number of pixels in the image with grayscale values ranging from 100 to 150 is G1015, and the number of pixels in the image with grayscale values ranging from 200 to 250 is G2025, the following condition is satisfied: 3 < G1015/G2025 < 40; therefore, it is favorable for the low reflection layer to provide better anti-reflection capability. Moreover, the following condition can also be satisfied: 9 < G1015/G2025 < 27; therefore, it is favorable for adjusting the gradient of the effective refractive index in the low reflection layer. Please refer to Fig. 20 to Fig. 29, where Fig. 20, Fig. 22, Fig. 24, Fig. 26 and Fig. 28 show images No. 1 through No. 5 of 4.9 $\mu m^2$, 19.76 $\mu m^2$, 123.62 $\mu m^2$, 492.5 $\mu m^2$ and 1961 $\mu m^2$ of a low reflection layer taken by a scanning electron microscope from a top view perspective according to one configuration of the present disclosure, and Fig. 21, Fig. 23, Fig. 25, Fig. 27 and Fig. 29 are grayscale distribution charts showing the number of pixels with different grayscale values in the images No. 1 through No. 5, respectively. Moreover, the images No. 1 through No. 5 were captured of the same sample, with magnifications ranging from high to low, and the captured areas increasing from small to large. After capturing the images using the scanning electron microscope, an image analysis software was used to analyze the grayscale values of all pixels in the images No. 1 through No. 5. The pixels with grayscale values ranging from 100 to 250 were then statistically analyzed, as shown in Fig. 21, 23, 25, 27, and 29. Table 1 below summarizes the number of pixels (G1015) with grayscale values ranging from 100 to 150, the number of pixels (G2025) with grayscale values ranging from 200 to 250, and their ratio (G1015/G2025) for each of the images No. 1 through No. 5. Additionally, it is noted that grayscale values ranging from 0 to 100 represent background noise and particles with insufficient brightness, and grayscale values ranging from 250 to 255 represent particles with excessive brightness. These extreme grayscale values can potentially impact the statistical analysis. Hence, for this present disclosure, only pixels with grayscale values ranging from 100 to 250 were considered in the statistical analysis.

| Table 1 | | | | | |
|---|---|---|---|---|---|
| No. | 1 | 2 | 3 | 4 | 5 |
| G1015 | 382653 | 344243 | 410522 | 427114 | 449650 |
| G2025 | 22531 | 14253 | 31459 | 28303 | 38220 |
| G1015/G2025 | 16.98 | 24.15 | 13.05 | 15.09 | 11.76 |

When an average particle diameter of the nanoparticles is cpavg, the following condition can be satisfied: 50 nm < $\varphi$avg < 185 nm. Therefore, it is favorable for the stacking of the nanoparticles so as to form a gradient refractive index film layer. Moreover, the following condition can also be satisfied: 60 nm < $\varphi$avg < 120 nm. Please refer to Fig. 20, which is an image of the nanoparticles of the low reflection layer captured by the scanning electron microscope, allowing observation of the morphology and size of the nanoparticles. Then, image processing and analysis of the nanoparticles using, for example, an image analysis software can be conducted to calculate the average particle diameter. Moreover, when calculating the average particle diameter of the nanoparticles, the nanoparticles that are closer to the top of the low reflection layer may be selected, and those with observable complete particle contours are included. Moreover, it is necessary to select at least five of the nanoparticles to calculate the average particle diameter. Furthermore, when some of the nanoparticles are not perfectly circular, the longest line passing through the nanoparticle is taken as the particle diameter. For instance, Table 2 below lists the diameters of seven representative nanoparticles labeled as $\varphi1$ to $\varphi7$ in Fig. 20, along with their average value (cpavg).

| Table 2 | |
|---|---|
| No. | Particle diameter (nm) |
| $\varphi1$ | 79.88 |
| $\varphi2$ | 67.51 |
| $\varphi3$ | 86.23 |
| $\varphi4$ | 88.00 |
| $\varphi5$ | 91.73 |
| $\varphi6$ | 101.66 |
| $\varphi7$ | 120.83 |
| $\varphi$avg | 92.66 |

A thickness of the low reflection layer can have variations in height. When a height difference of the thickness of the low reflection layer is D, the following condition can be satisfied: 120 nm < D < 650 nm. Therefore, it is favorable for the formation of a gradient refractive index, thereby reducing reflectivity. Moreover, the following condition can also be satisfied: 200 nm < D < 450 nm. Please refer to Fig. 4, which shows the parameter D according to the 1st embodiment of the present disclosure. Moreover, in the sectional view of the low reflection layer, within the field of view of a microscope, the height difference between the highest and lowest points on the outer surface of the low reflection layer can be considered as the height difference of the thickness (D) of the low reflection layer. Moreover, a transmission electron microscope (TEM) or the scanning electron microscope can be utilized to capture the cross-section of the low reflection layer, and the height difference of the thickness (D) of the low reflection layer can be determined through the captured images, but the present disclosure is not limited thereto.

The low reflection layer can further include an intermediate layer disposed between the substrate and the nanoparticles, and a thickness of the intermediate layer has variations in height. Therefore, it is favorable for the formation of gradient refractive index in the nanoparticles. Moreover, the intermediate layer can be a black paint, and after applying the intermediate layer to the surface of the substrate, a dry etching process (e.g., plasma bombardment) can be used on the intermediate layer to create variations in its thickness, resulting in height variations. For instance, the intermediate layer can be a dark-colored coating with light-absorbing properties, such as a black ink spraying layer formed using quick-drying ink with epoxy resin as the base, a chemically vapor-deposited black coating layer, or a photoresistive coating layer, but the present disclosure is not limited thereto. Moreover, the intermediate layer can be formed using materials with higher hardness, so that it is favorable for the formation of a surface profile having variations in height.

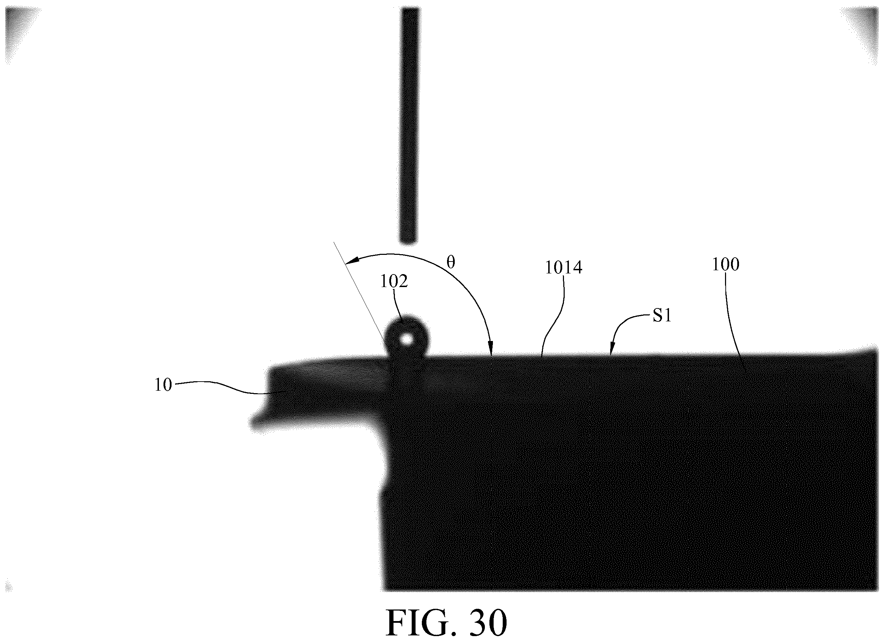

When a water contact angle of the surface of the substrate is $\theta$, the following condition can be satisfied: 90 degrees < $\theta$ < 130 degrees. Therefore, it is favorable for the surface of the substrate to have hydrophobic properties so as to prevent contaminants from adhering to the surface, thereby enhancing its resistance to pollution. Please refer to Fig. 30, which shows the water contact angle θ according to the 1st embodiment of the present disclosure.

The low reflection layer can further include a hydrophobic layer located farther away from the substrate than the nanoparticles to the substrate. Moreover, when a thickness of the hydrophobic layer is T, the following condition can be satisfied: 10 nm < T < 50 nm. Therefore, it is favorable for providing better hydrophobic properties and protecting the nanoparticles. Please refer to Fig. 4, which shows the parameter T according to the 1st embodiment of the present disclosure.

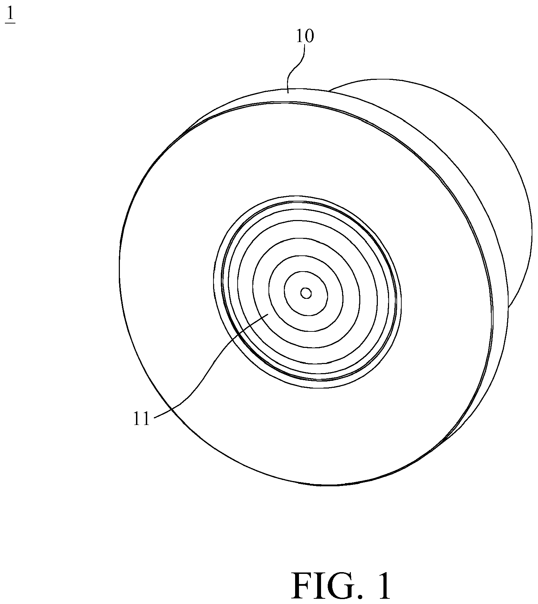

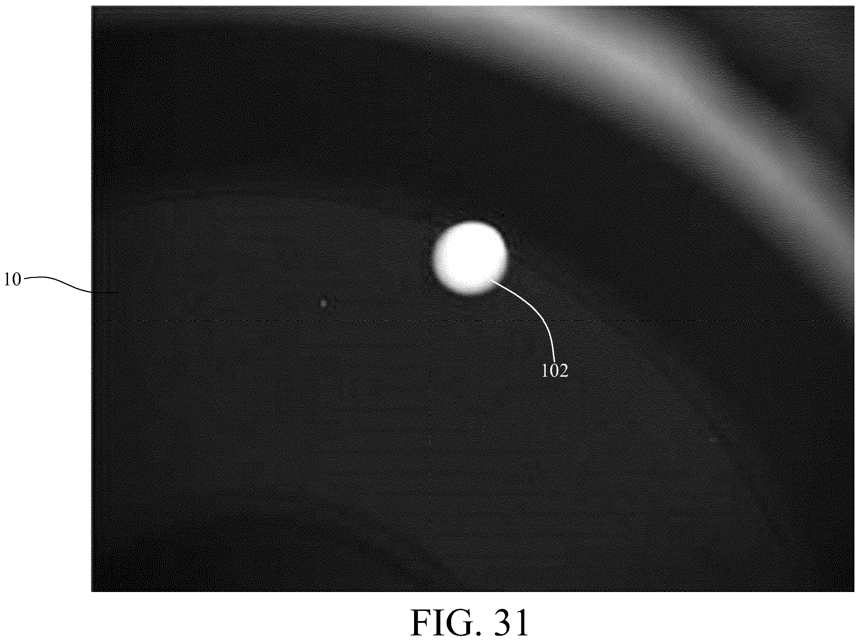

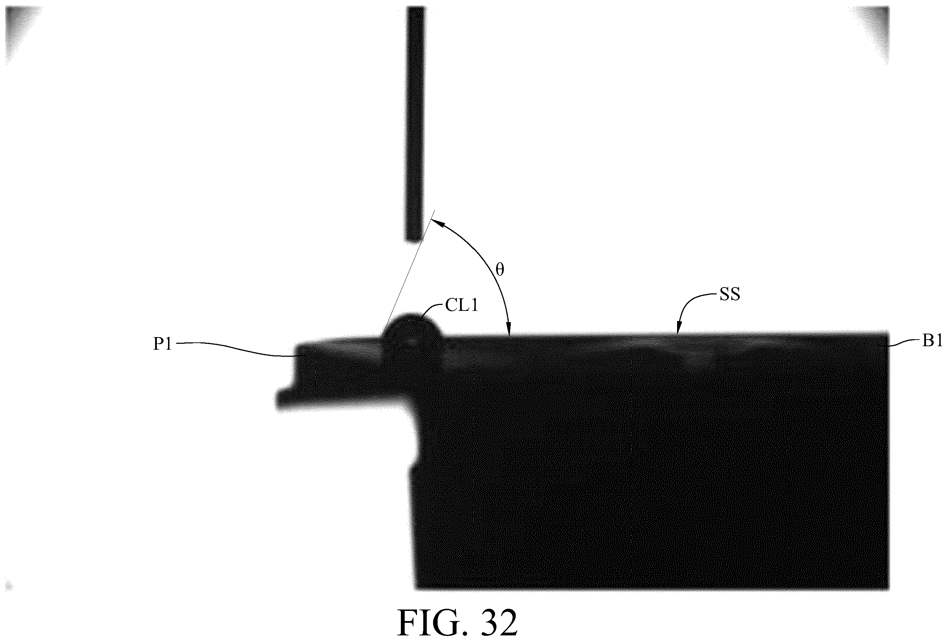

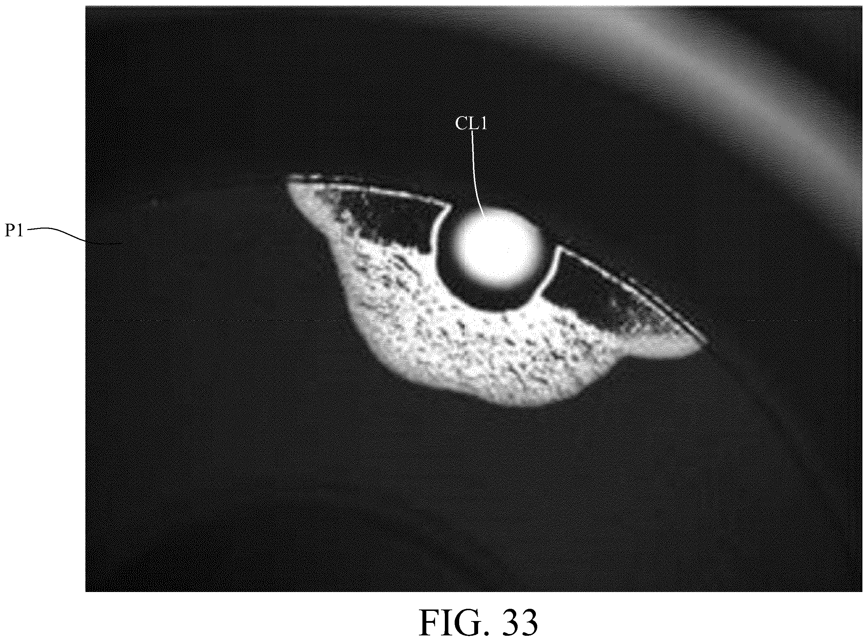

The optical component can further include an adhesive for the optical component to be connected to adjacent component(s). Moreover, the adhesive is disposed on the surface of the substrate, and the adhesive is located farther away from the substrate than the hydrophobic layer to the substrate. Therefore, the hydrophobic layer is favorable for controlling the flow of the adhesive, preventing the adhesive from spreading into the surrounding area, thereby preventing compromising the appearance of the optical component and maintaining the stability of connections with adjacent component(s). Please refer to Fig. 30 to Fig. 33, where Fig. 30 is a partial side view of the barrel 10 of the imaging lens 1 in Fig. 1, with the adhesive 102 attached thereto, Fig. 31 is a partial top view of Fig. 30, Fig. 32 is a partial side view of an optical component P1 (e.g., a barrel) without a hydrophobic layer, with an adhesive CL1 attached thereto, and Fig. 33 is a partial top view of Fig. 32. As seen from Fig. 30 and Fig. 31, the optical component (e.g., barrel 10) provided with the hydrophobic layer 1014 exhibits better control over the spreading of liquids such as adhesive (e.g., glue) 102. In contrast, as seen from Fig. 32 and Fig. 33, the optical component P1 without a hydrophobic layer allows the adhesive CL1 to spread into the surrounding area, which affects the functionality of the adhesive CL1 and the appearance of the optical component P1. Moreover, in Fig. 30, the surface S1 of the substrate 100 is provided with the hydrophobic layer 1014, the water contact angle θ between the surface S1 and the adhesive 102 on the left side of the figure is 117.1 degrees, and on the right side of the figure, the water contact angle is also 117.1 degrees, resulting in an average contact angle of 117.1 degrees. In Fig. 32, the surface SS of the substrate B1 is not provided with a hydrophobic layer, the water contact angle θ between the surface SS and the adhesive CL1 on the left side of the figure is 67.2 degrees, and on the right side of the figure, the water contact angle is also 67.2 degrees, resulting in an average contact angle of 67.2 degrees.

The main component of the nanoparticles can be one of $SiO_z$, $TiO_2$ and $Al_2O_3$. Moreover, the term "main component" refers to a component whose weight percentage is greater than 50%.

According to the present disclosure, an imaging lens is provided. The imaging lens includes the aforementioned optical component. An optical axis of the imaging lens passes through the optical component. The optical component serves optical purposes and the optical component can be, for example, a barrel, a light-blocking element, a spacer, or a retainer. These optical components are configured to aid in the convergence of light rays for the imaging lens, but the optical purposes of the optical components are not limited thereto. Moreover, the optical component can be formed of opaque materials and provide light-blocking or shading purposes. Moreover, the optical component can serve optical purposes related to various optical phenomena, such as refraction, convergence, divergence, light-blocking, and reduction of reflection. However, the present disclosure is not limited to the literal description of these specific purposes.

The surface of the substrate can be located at an object-side end of the optical component. The object-side end of the optical component is more accessible for external observation from the imaging lens, hence requiring lower surface reflectivity and better resistance to contamination. The low reflectivity herein can refer to an average reflectivity in the visible light spectrum that is below 0.2%.

According to the present disclosure, an electronic device is provided. The electronic device includes the aforementioned imaging lens and an image sensor, and the image sensor is disposed on an image surface of the imaging lens.

According to the present disclosure, the aforementioned features and conditions can be utilized in numerous combinations so as to achieve corresponding effects.

According to the above description of the present disclosure, the following specific embodiments are provided for further explanation.

## 1st Embodiment

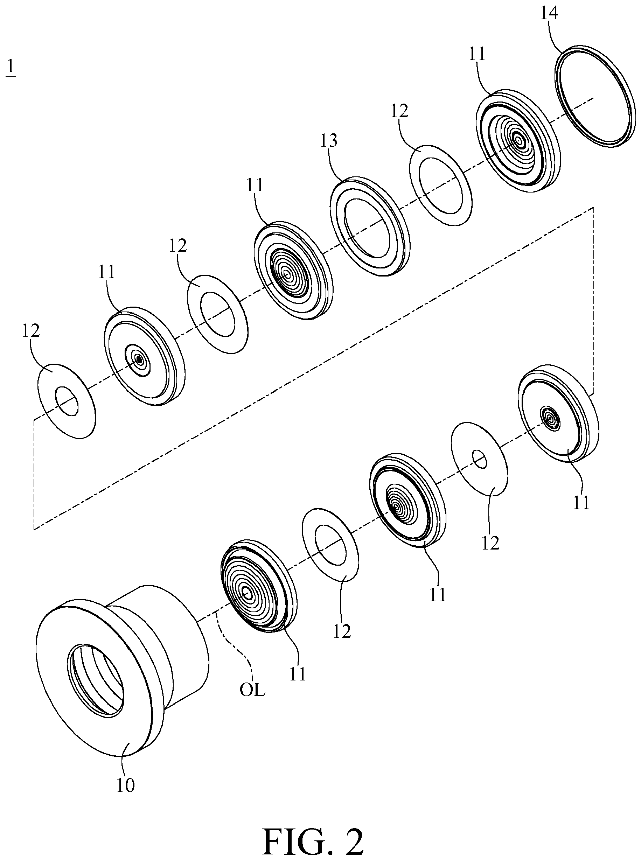

Fig. 1 is a perspective view of an imaging lens according to the 1st embodiment of the present disclosure, Fig. 2 is an exploded view of the imaging lens in Fig. 1, Fig. 3 is another perspective view of the imaging lens in Fig. 1, as well as a partially enlarged view of the perspective view, Fig. 4 is a cross-sectional view of the imaging lens in Fig. 1, as well as a partially enlarged view of the cross-sectional view, Fig. 30 is a partial side view of a barrel of the imaging lens in Fig. 1, with an adhesive attached thereto, and Fig. 31 is a partial top view of Fig. 30.

In this embodiment, an imaging lens 1 is an ultra-wide-angle imaging lens having a field of view of 120 degrees. The imaging lens 1 includes a plurality of optical components and an image surface IMG, and these optical components include a barrel 10, a plurality of lens elements 11, a plurality of light-blocking elements 12, a spacer 13 and a retainer 14. Moreover, the lens elements 11, the light-blocking elements 12, the spacer 13 and the retainer 14 are accommodated in the barrel 10, and an optical axis OL of the imaging lens 1 passes through the optical components. After entering the barrel 10, light passes through the lens elements 11 and the light-blocking elements 12 to form imaging light, which is then focused onto the image surface IMG. It is noted that the components inside the barrel 10 are not limited to the outlines shown in the figures.

The barrel 10 includes a substrate 100, a low reflection layer 101 and an adhesive 102. The substrate 100 has a surface S1 facing toward an object side, and the surface S1 is located at an object-side end of the barrel 10. The low reflection layer 101 is disposed on the surface S1 of the substrate 100, and the low reflection layer 101 includes a plurality of nanoparticles 1010, an intermediate layer 1012 and a hydrophobic layer 1014. The adhesive 102 is disposed on the surface S1 of the substrate 100, and the adhesive 102 is located farther away from the substrate 100 than the low reflection layer 101 to the substrate 100.

The nanoparticles 1010 of the low reflection layer 101 are arranged in a stack configuration, and the number of the nanoparticles 1010 decreases progressively in a direction away from the substrate 100. In this embodiment, the main component of the nanoparticles 1010 is $SiO_2$.

The intermediate layer 1012 of the low reflection layer 101 is disposed between the substrate 100 and the nanoparticles 1010, and a thickness of the intermediate layer 1012 has variations in height. The hydrophobic layer 1014 of the low reflection layer 101 is located farther away from the substrate 100 than the nanoparticles 1010 to the substrate 100.

As shown in Fig. 20, when an average particle diameter of the nanoparticles 1010 is cpavg, the following condition is satisfied: $\varphi avg$ = 92.66 nm.

As shown in Fig. 4, when a height difference of a thickness of the low reflection layer 101 is D, the following condition is satisfied: D = 372 nm.

When a thickness of the hydrophobic layer 1014 is T, the following condition is satisfied: T = 35 nm.

As shown in Fig. 30, when a water contact angle θ of the surface S1 of the substrate 100 is θ, the following condition is satisfied: θ = 117.1 degrees.

A scanning electron microscope is used to capture an image of the low reflection layer 101 from a top view perspective, and the scanning electron microscope captures an area ranging from 1 $\mu m^2$ to 2000 $\mu m^2$ of the low reflection layer 101. When the number of pixels in the image with grayscale values ranging from 100 to 150 is G1015, and the number of pixels in the image with grayscale values ranging from 200 to 250 is G2025, the following condition is satisfied: 3 < G1015/G2025 < 40.

In this embodiment, among the optical components of the imaging lens 1, the barrel 10 is provided with the low reflection layer 101, but the present disclosure is not limited thereto. In other configurations of the present disclosure, among optical components of an imaging lens, a light-blocking element, a spacer or a retainer can be provided with a low reflection layer. In addition, in some configurations of the present disclosure, there can be multiple optical components of an imaging lens each provided with a low reflection layer.

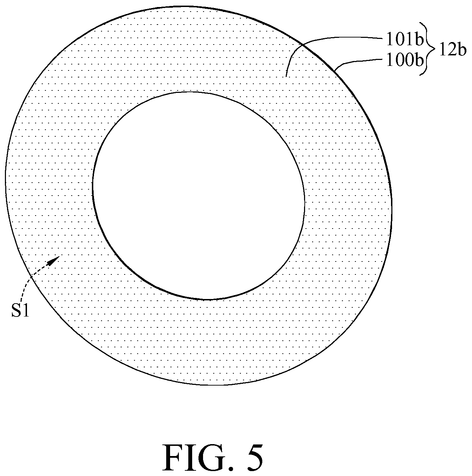

For example, please refer to Fig. 5, which is a perspective view of an optical component of an imaging lens according to another configuration of the present disclosure. The imaging lens in Fig. 5 is similar to the imaging lens 1 in Fig. 1 as described above. The same reference numerals indicate the same components, and functions and effects provided by those components are the same as described above, so an explanation in this regard will not be provided again.

In this configuration, among optical components of the imaging lens, a light-blocking element 12b includes a substrate 100b and a low reflection layer 101b. The substrate 100b has a surface S1 facing toward an object side, and the surface S1 is located at an object-side end of the light-blocking element 12b. The low reflection layer 101b is disposed on the surface S1 of the substrate 100b. Moreover, nanoparticles of the low reflection layer 101b are arranged in a stack configuration, and the number of the nanoparticles decreases progressively in a direction away from the substrate 100b. A scanning electron microscope is used to capture an image of the low reflection layer 101b of the light-blocking element 12b from a top view perspective, and the scanning electron microscope captures an area ranging from 1 $\mu m^2$ to 2000 $\mu m^2$ of the low reflection layer 101b. When the number of pixels in the image with grayscale values ranging from 100 to 150 is G1015, and the number of pixels in the image with grayscale values ranging from 200 to 250 is G2025, the following condition is satisfied: 3 < G1015/G2025 < 40.

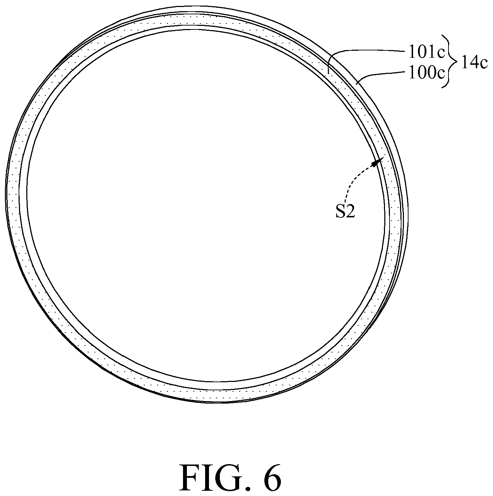

For another example, please refer to Fig. 6, which is a perspective view of an optical component of an imaging lens according to another configuration of the present disclosure. The imaging lens in Fig. 6 is similar to the imaging lens 1 in Fig. 1 as described above. The same reference numerals indicate the same components, and functions and effects provided by those components are the same as described above, so an explanation in this regard will not be provided again.

In this configuration, among optical components of the imaging lens, a retainer 14c includes a substrate 100c, a low reflection layer 101c and an adhesive. The substrate 100c has a surface S2 facing toward an image side, and the surface S2 is located at an image-side end of the retainer 14c. The low reflection layer 101c is disposed on the surface S2 of the substrate 100c. The adhesive is disposed on the surface S2 of the substrate 100c, and the adhesive is located farther away from the substrate 100c than the low reflection layer 101c to the substrate 100c. Moreover, nanoparticles of the low reflection layer 101c are arranged in a stack configuration, and the number of the nanoparticles decreases progressively in a direction away from the substrate 100c. The low reflection layer 101c is in contact with the adhesive, so that the retainer 14c is connected to the barrel to secure the lens elements in position. Moreover, the hydrophobic property of a hydrophobic layer of the low reflection layer 101c prevents the adhesive from affecting the reflectivity of the low reflection layer 101c, thereby eliminating stray light. A scanning electron microscope is used to capture an image of the low reflection layer 101c of the retainer 14c from a top view perspective, and the scanning electron microscope captures an area ranging from 1 $\mu m^2$ to 2000 $\mu m^2$ of the low reflection layer 101c. When the number of pixels in the image with grayscale values ranging from 100 to 150 is G1015, and the number of pixels in the image with grayscale values ranging from 200 to 250 is G2025, the following condition is satisfied: 3 < G1015/G2025 < 40.

**2nd Embodiment**

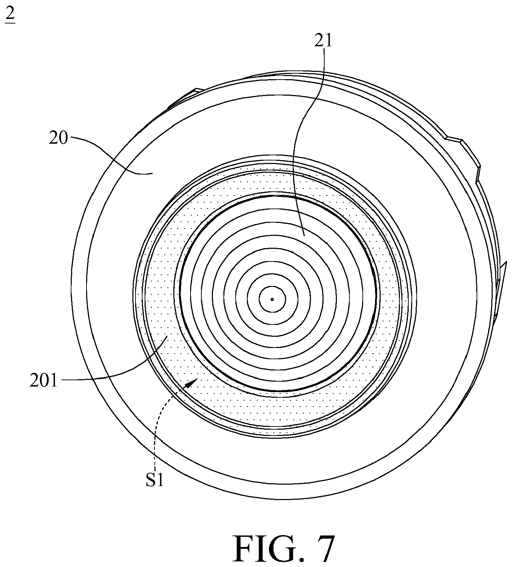

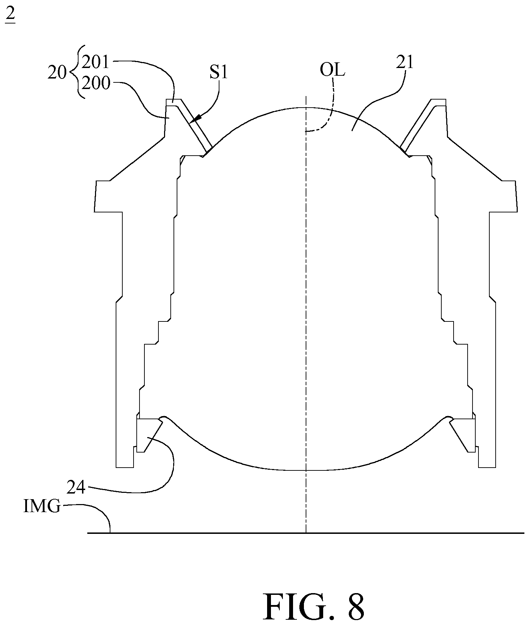

Fig. 7 is a perspective view of an imaging lens according to the 2nd embodiment of the present disclosure, and Fig. 8 is a cross-sectional view of the imaging lens in Fig. 7. In this embodiment, an imaging lens 2 is similar to the imaging lens 1 in FIG. 1 as described above. The same reference numerals indicate the same components, and functions and effects provided by those components are the same as described above, so an explanation in this regard will not be provided again.

The imaging lens 2 is a telephoto imaging lens having a field of view of 36 degrees. The imaging lens 2 includes a plurality of optical components and an image surface IMG, and these optical components include a barrel 20, a plurality of lens elements 21 and a retainer 24. Moreover, the lens elements 21 and the retainer 24 are accommodated in the barrel 20, and an optical axis OL of the imaging lens 2 passes through the optical components. After entering the barrel 20, light passes through the lens elements 21 to form imaging light, which is then focused onto the image surface IMG. It is noted that the components inside the barrel 20 are not limited to the outlines shown in the figures.

The barrel 20 includes a substrate 200 and a low reflection layer 201. The substrate 200 has a surface S1 facing toward an object side, and the surface S1 is located at an object-side end of the barrel 20. The low reflection layer 201 is disposed on the surface S1 of the substrate 200, and the low reflection layer 201 includes a plurality of nanoparticles.

The nanoparticles of the low reflection layer 201 are arranged in a stack configuration, and the number of the nanoparticles decreases progressively in a direction away from the substrate 200. In this embodiment, the main component of nanoparticles is one of SiOz, $TiO_2$ and $Al_2O_3$.

When an average particle diameter of the nanoparticles is φavg, the following condition is satisfied: 50 nm < φavg < 185 nm.

When a height difference of a thickness of the low reflection layer 201 is D, the following condition is satisfied: 120 nm < D < 650 nm.

A scanning electron microscope is used to capture an image of the low reflection layer 201 from a top view perspective, and the scanning electron microscope captures an area ranging from 1 $\mu m^2$ to 2000 $\mu m^2$ of the low reflection layer 201. When the number of pixels in the image with grayscale values ranging from 100 to 150 is G1015, and the number of pixels in the image with grayscale values ranging from 200 to 250 is G2025, the following condition is satisfied: 3 < G1015/G2025 < 40.

In this embodiment, among the optical components of the imaging lens 2, the barrel 20 is provided with the low reflection layer 201, but the present disclosure is not limited thereto. In other configurations of the present disclosure, among optical components of an imaging lens, a retainer can be provided with a low reflection layer. In addition, in some configurations of the present disclosure, there can be multiple optical components of an imaging lens each provided with a low reflection layer.

**3rd Embodiment**

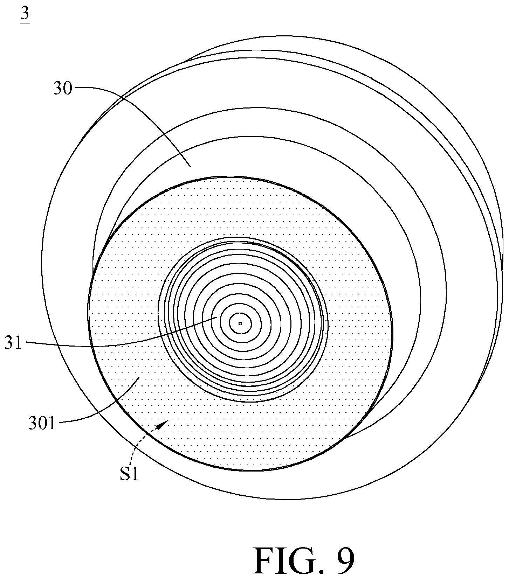

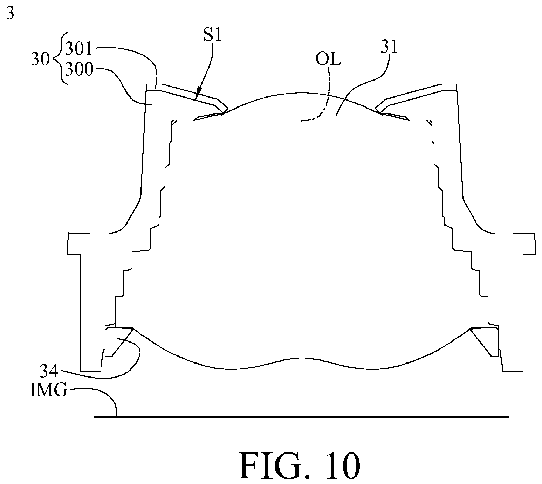

Fig. 9 is a perspective view of an imaging lens according to the 3rd embodiment of the present disclosure, and Fig. 10 is a cross-sectional view of the imaging lens in Fig. 9. In this embodiment, an imaging lens 3 is similar to the imaging lens 1 in FIG. 1 as described above. The same reference numerals indicate the same components, and functions and effects provided by those components are the same as described above, so an explanation in this regard will not be provided again.

The imaging lens 3 is a wide-angle imaging lens having a field of view of 79 degrees. The imaging lens 3 includes a plurality of optical components and an image surface IMG, and these optical components include a barrel 30, a plurality of lens elements 31 and a retainer 34. Moreover, the lens elements 31 and the retainer 34 are accommodated in the barrel 30, and an optical axis OL of the imaging lens 3 passes through the optical components. After entering the barrel 30, light passes through the lens elements 31 to form imaging light, which is then focused onto the image surface IMG. It is noted that the components inside the barrel 30 are not limited to the outlines shown in the figures.

The barrel 30 includes a substrate 300 and a low reflection layer 301. The substrate 300 has a surface S1 facing toward an object side, and the surface S1 is located at an object-side end of the barrel 30. The low reflection layer 301 is disposed on the surface S1 of the substrate 300, and the low reflection layer 301 includes a plurality of nanoparticles.

The nanoparticles of low reflection layer 301 are arranged in a stack configuration, and the number of the nanoparticles decreases progressively in a direction away from the substrate 300. In this embodiment, the main component of nanoparticles is one of $SiO_2$, TiOz and $Al_2O_3$.

When an average particle diameter of the nanoparticles is φavg, the following condition is satisfied: 50 nm < φavg < 185 nm.

When a height difference of a thickness of the low reflection layer 301 is D, the following condition is satisfied: 120 nm < D < 650 nm.

A scanning electron microscope is used to capture an image of the low reflection layer 301 from a top view perspective, and the scanning electron microscope captures an area ranging from 1 $\mu m^2$ to 2000 $\mu m^2$ of the low reflection layer 301. When the number of pixels in the image with grayscale values ranging from 100 to 150 is G1015, and the number of pixels in the image with grayscale values ranging from 200 to 250 is G2025, the following condition is satisfied: 3 < G1015/G2025 < 40.

In this embodiment, among the optical components of the imaging lens 3, the barrel 30 is provided with the low reflection layer 301, but the present disclosure is not limited thereto. In other configurations of the present disclosure, among optical components of an imaging lens, a retainer can be provided with a low reflection layer. In addition, in some configurations of the present disclosure, there can be multiple optical components of an imaging lens each provided with a low reflection layer.

## 4th Embodiment

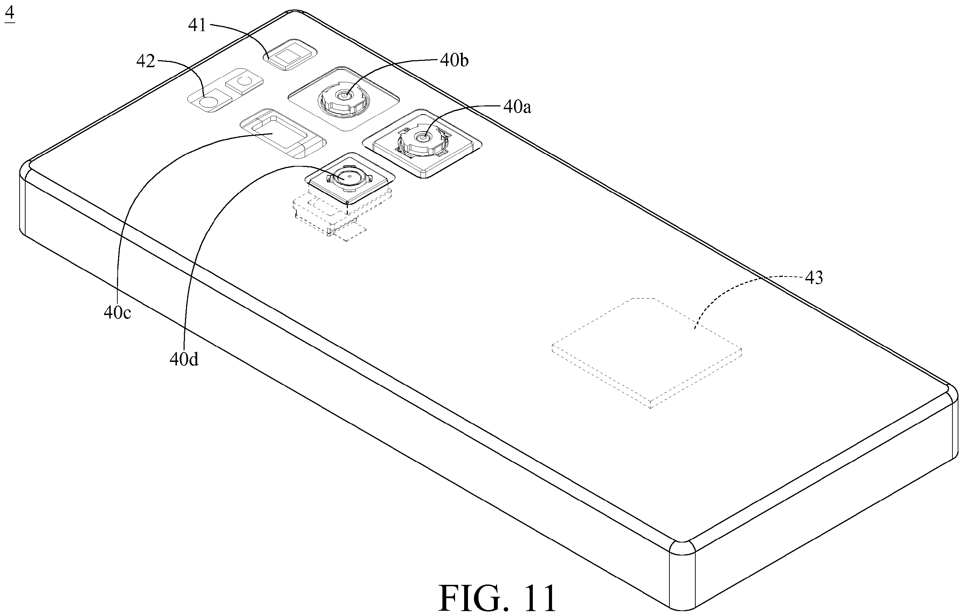

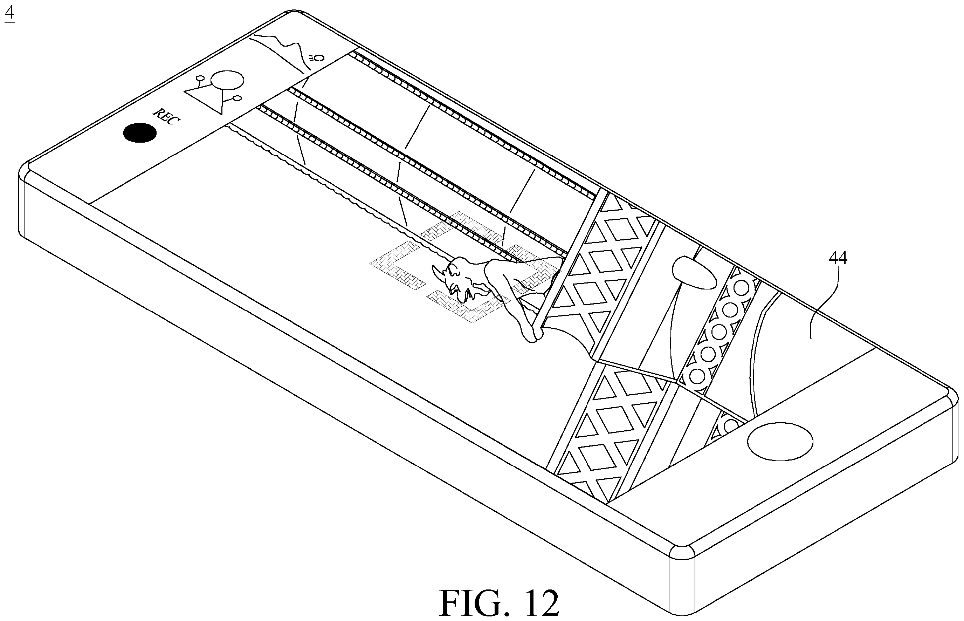

Please refer to Fig. 11 and Fig. 12. Fig. 11 is one perspective view of an electronic device according to the 4th embodiment of the present disclosure, and Fig. 12 is another perspective view of the electronic device in Fig. 11.

In this embodiment, the electronic device 4 is a smartphone including a plurality of imaging lenses, a flash module 41, a focus assist module 42, an image signal processor 43, a display module (user interface) 44, an image software processor (not shown) and an image sensor (not shown).

These imaging lenses includes an ultra-wide-angle imaging lens 40a, a high pixel imaging lens 40b, a telephoto imaging lens 40c and a telephoto imaging lens 40d. Moreover, the imaging lens 40a includes, for example, the imaging lens 1 as disclosed in the 1st embodiment of the present disclosure, and the imaging lens 40c includes, for example, the imaging lens 2 as disclosed in the 2nd embodiment of the present disclosure. The image sensor is disposed on an image surface of the imaging lenses 40a, 40b, 40c and 40d.

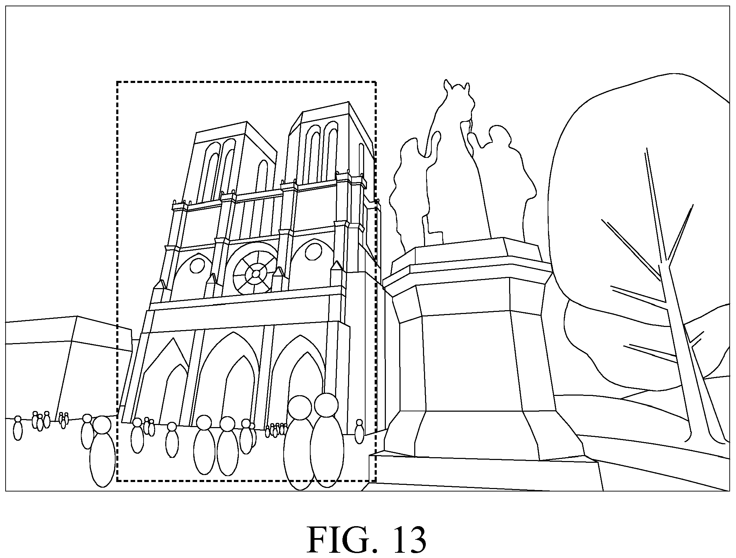

The image captured by the ultra-wide-angle imaging lens 40a enjoys a feature of multiple imaged objects. Fig. 13 is an image captured by the ultra-wide-angle imaging lens 40a.

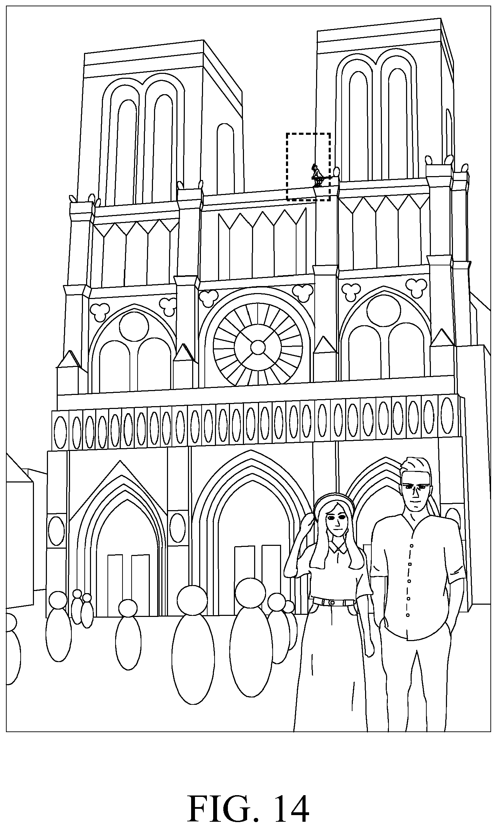

The image captured by the high pixel imaging lens 40b enjoys a feature of high resolution and less distortion, and the high pixel imaging lens 40b can capture part of the image in Fig. 13. Fig. 14 is an image captured by the high pixel imaging lens 40b.

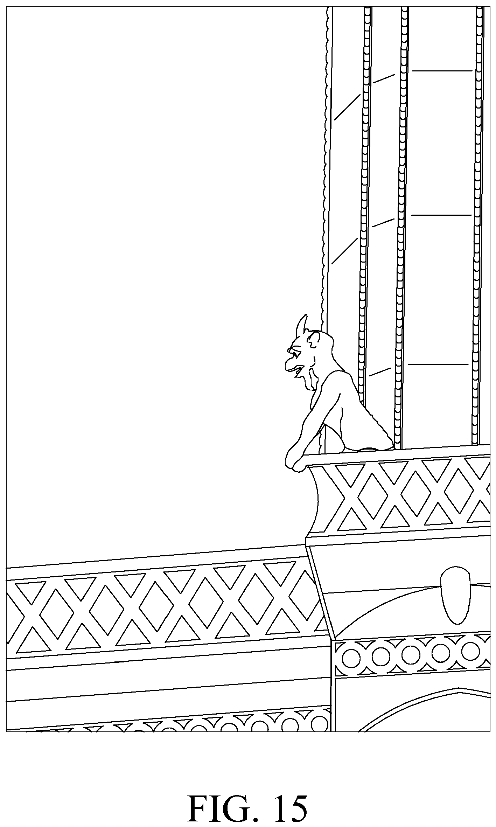

The image captured by the telephoto imaging lens 40c or 40d enjoys a feature of high optical magnification, and the telephoto imaging lens 40c or 40d can capture part of the image in Fig. 14. Fig. 15 is an image captured by the telephoto imaging lens 40c or 40d. The maximum field of view (FOV) of the imaging lens corresponds to the field of view in Fig. 15.

When a user captures images of an object, the light rays converge in the ultra-wide-angle imaging lens 40a, the high pixel imaging lens 40b, the telephoto imaging lens 40c or the telephoto imaging lens 40d to generate images, and the flash module 41 is activated for light supplement. The focus assist module 42 detects the object distance of the imaged object to achieve fast auto focusing. The image signal processor 43 is configured to optimize the captured image to improve image quality and provided zooming function. The light beam emitted from the focus assist module 42 can be either conventional infrared or laser. The display module 44 can include a touch screen, and the user is able to interact with the display module 44 to adjust the angle of view and switch between different imaging lenses, and the image software processor having multiple functions to capture images and complete image processing. Alternatively, the user may capture images via a physical button. The image processed by the image software processor can be displayed on the display module 44.

## 5th Embodiment

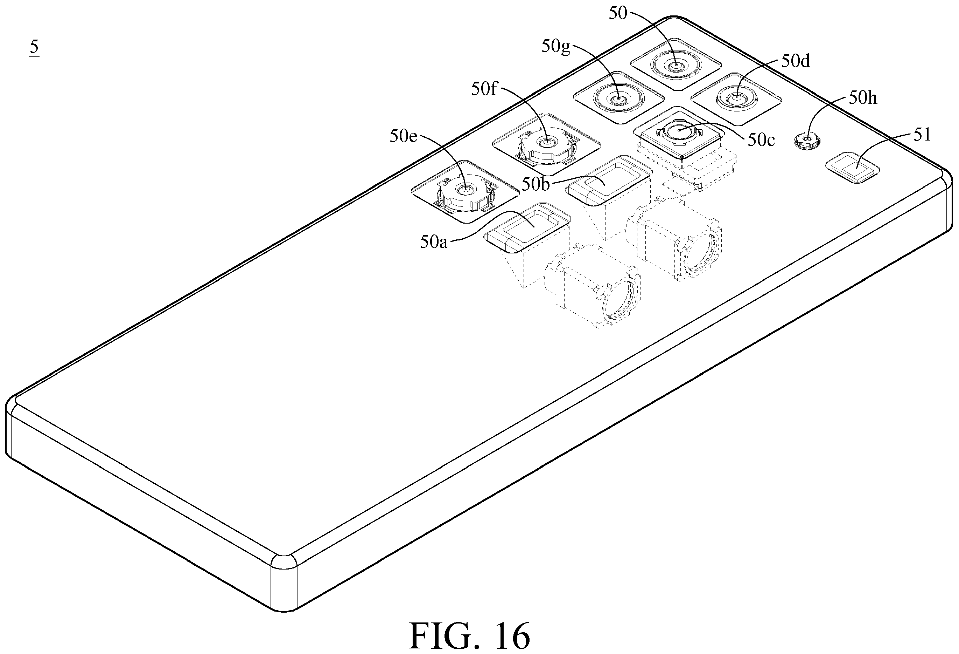

Please refer to Fig. 16, which is a perspective view of an electronic device according to the 5th embodiment of the present disclosure.

In this embodiment, the electronic device 5 is a smartphone including an imaging lens 50, an imaging lens 50a, an imaging lens 50b, an imaging lens 50c, an imaging lens 50d, an imaging lens 50e, an imaging lens 50f, an imaging lens 50g, an imaging lens 50h, a flash module 51, an image signal processor, a display module, an image software processor (not shown) and an image sensor (not shown). The imaging lens 50, the imaging lens 50a, the imaging lens 50b, the imaging lens 50c, the imaging lens 50d, the imaging lens 50e, the imaging lens 50f, the imaging lens 50g and the imaging lens 50h are disposed on the same side of the electronic device 5, while the display module is disposed on the opposite side of the electronic device 5. Moreover, the imaging lens 50 includes, for example, the imaging lens 1 as disclosed in the 1st embodiment of the present disclosure, the imaging lens 50d includes, for example, the imaging lens 2 as disclosed in the 2nd embodiment of the present disclosure, and the imaging lens 50e includes, for example, the imaging lens 3 as disclosed in the 3rd embodiment of the present disclosure. The image sensor is disposed on an image surface of the imaging lenses 50, 50a, 50b, 50c, 50d, 50e, 50f, 50g, and 50h.

The imaging lens 50 is an ultra-wide-angle imaging lens, the imaging lens 50a is a telephoto imaging lens, the imaging lens 50b is a telephoto imaging lens, the imaging lens 50c is a telephoto imaging lens, the imaging lens 50d is a telephoto imaging lens, the imaging lens 50e is a wide-angle imaging lens, the imaging lens 50f is a wide-angle imaging lens, the imaging lens 50g is an ultra-wide-angle imaging lens, and the imaging lens 50h is a ToF (time of flight) imaging lens. In this embodiment, the imaging lens 50, the imaging lens 50a, the imaging lens 50b, the imaging lens 50c, the imaging lens 50d, the imaging lens 50e, the imaging lens 50f and the imaging lens 50g have different fields of view, such that the electronic device 5 can have various magnification ratios so as to meet the requirement of optical zoom functionality. In addition, the imaging lens 50a and the imaging lens 50b are telephoto imaging lens having a light-folding element configuration. In addition, the imaging lens 50h can determine depth information of the imaged object. In this embodiment, the electronic device 5 includes multiple imaging lenses 50, 50a, 50b, 50c, 50d, 50e, 50f, 50g, and 50h, but the present disclosure is not limited to the number and arrangement of imaging lenses. When a user captures images of an object, the light rays converge in the imaging lens 50, the imaging lens 50a, the imaging lens 50b, the imaging lens 50c, the imaging lens 50d, the imaging lens 50e, the imaging lens 50f, the imaging lens 50g or the imaging lens 50h to generate an image(s), and the flash module 51 is activated for light supplement. Further, the subsequent processes are performed in a manner similar to the abovementioned embodiments, so the details in this regard will not be provided again.

### 6th Embodiment

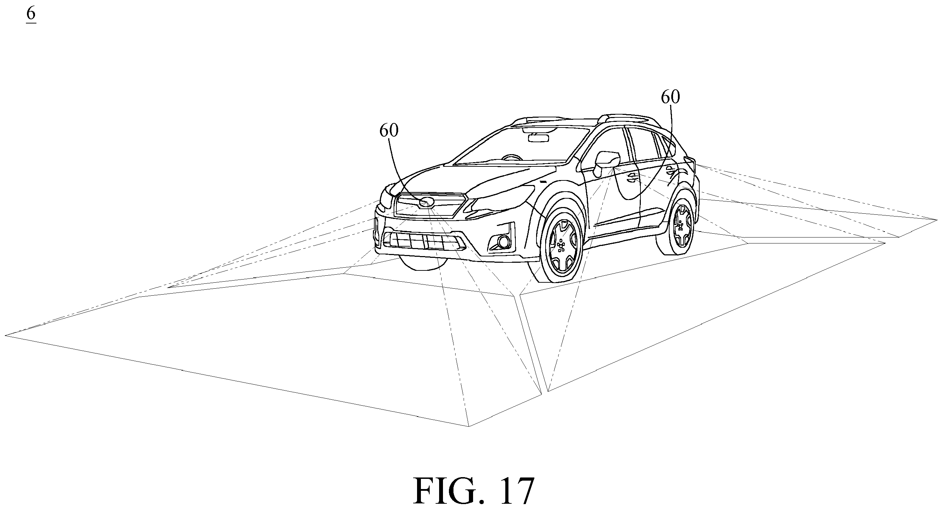

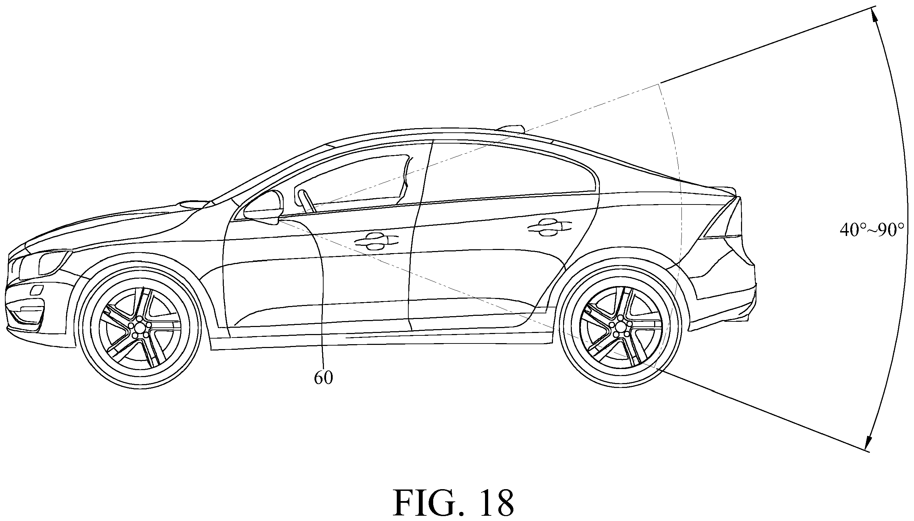

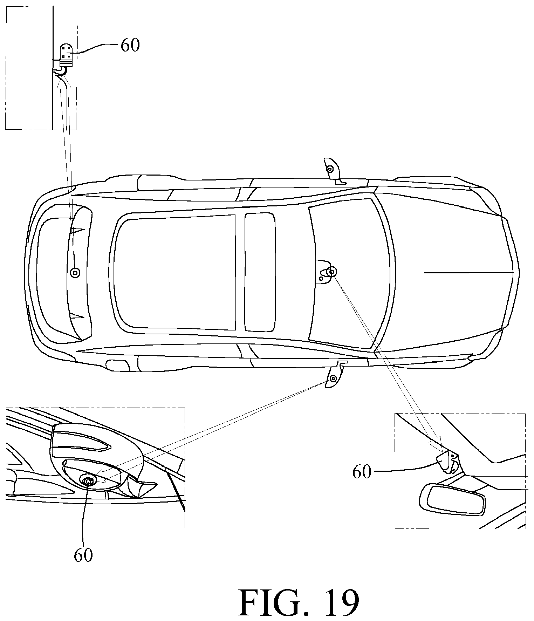

Please refer to Fig. 17 to Fig. 19. Fig. 17 is a perspective view of an electronic device according to the 6th embodiment of the present disclosure, Fig. 18 is a side view of the electronic device in Fig. 17, and Fig. 19 is a top view of the electronic device in Fig. 17.

In this embodiment, the electronic device 6 is an automobile. The electronic device 6 includes a plurality of automotive imaging lenses 60, and the imaging lenses 60 include the imaging lens of the present disclosure. The imaging lenses 60 can serve as, for example, panoramic view car cameras, dashboard cameras and vehicle backup cameras.

As shown in Fig. 17, the imaging lenses 60 are, for example, disposed around the automobile to capture peripheral images of the automobile, which is favorable for obtaining external traffic information so as to achieve autopilot function. In addition, the image software processor may stitch the peripheral images into one panoramic view image for the driver's checking every corner surrounding the automobile, thereby favorable for parking and driving.

As shown in Fig. 18, the imaging lenses 60 are, for example, respectively disposed on the lower portion of the side mirrors. A maximum field of view of the imaging lenses 60 can be 40 degrees to 90 degrees for capturing images in regions on left and right lanes.

As shown in Fig. 19, the imaging lenses 60 can also be, for example, respectively disposed on the lower portion of the side mirrors and inside the front and rear windshields for providing external information to the driver, and also providing more viewing angles so as to reduce blind spots, thereby improving driving safety.

The smartphones, panoramic view car cameras, dashboard cameras and vehicle backup cameras in the embodiments are only exemplary for showing the optical component and the imaging lens of the present disclosure installed in an electronic device, and the present disclosure is not limited thereto. The optical component and the imaging lens can be optionally applied to optical systems with a movable focus. Furthermore, the optical component and the imaging lens feature good capability in aberration corrections and high image quality, and can be applied to 3D (three-dimensional) image capturing applications, in products such as digital cameras, mobile devices, digital tablets, smart televisions, network surveillance devices, multi-camera devices, image recognition systems, motion sensing input devices, wearable devices and other electronic imaging devices.

The foregoing description, for the purpose of explanation, has been described with reference to specific embodiments. It is to be noted that the present disclosure shows different data of the different embodiments; however, the data of the different embodiments are obtained from experiments. The embodiments were chosen and described in order to best explain the principles of the disclosure and its practical applications, to thereby enable others skilled in the art to best utilize the disclosure and various embodiments with various modifications as are suited to the particular use contemplated. The embodiments depicted above and the appended drawings are exemplary and are not intended to be exhaustive or to limit the scope of the present disclosure to the precise forms disclosed. Many modifications and variations are possible in view of the above teachings.

**Claims**

1. An optical component (10) comprising:

   a substrate (100); and
   a low reflection layer (101) disposed on a surface (S1) of the substrate (100), and the low reflection layer (101) comprising:

   a plurality of nanoparticles (1010) arranged in a stack configuration, and a number of the plurality of nanoparticles (1010) decreasing progressively in a direction away from the substrate (100);

   wherein an average particle diameter of the plurality of nanoparticles (1010) is cpavg, and the following condition is satisfied:

$$50 \text{ nm} < \varphi\text{avg} < 185 \text{ nm};$$

   wherein a scanning electron microscope is used to capture an image of the low reflection layer (101) from a top view perspective, the scanning electron microscope captures an area ranging from 2 $\mu m^2$ to 200 $\mu m^2$ of the low reflection layer (101), a number of pixels in the image with grayscale values ranging from 100 to 150 is G1015, a number of pixels in the image with grayscale values ranging from 200 to 250 is G2025, and the following condition is satisfied:

$$3 < G1015/G2025 < 40.$$

2. The optical component (10) of claim 1, wherein the scanning electron microscope captures an area ranging from 4 $\mu m^2$ to 130 $\mu m^2$ of the low reflection layer (101).

3. The optical component (10) of claim 2, wherein the number of pixels in the image with grayscale values ranging from 100 to 150 is G1015, the number of pixels in the image with grayscale values ranging from 200 to 250 is G2025, and the following condition is satisfied:

$$9 < G1015/G2025 < 27.$$

4. The optical component (10) of claim 1, wherein the average particle diameter of the plurality of nanoparticles (1010) is $\varphi$avg, and the following condition is satisfied:

$$60 \text{ nm} < \varphi\text{avg} < 120 \text{ nm}.$$

5. The optical component (10) of claim 1, wherein a thickness of the low reflection layer (101) has variations in height, a height difference of the thickness of the low reflection layer (101) is D, and the following condition is satisfied:

$$120 \text{ nm} < D < 650 \text{ nm}.$$

6. The optical component (10) of claim 5, wherein the height difference of the thickness of the low reflection layer (101) is D, and the following condition is satisfied:

$$200 \text{ nm} < D < 450 \text{ nm}.$$

7. The optical component (10) of claim 5, wherein the low reflection layer (101) further comprises an intermediate layer (1012) disposed between the substrate (100) and the plurality of nanoparticles (1010), and a thickness of the intermediate layer (1012) has variations in height.

8. The optical component (10) of claim 1, wherein a water contact angle of the surface (S1) of the substrate (100) is $\theta$, and the following condition is satisfied:

$$90 \text{ degrees} < \theta < 130 \text{ degrees.}$$

9. The optical component (10) of claim 8, wherein the low reflection layer (101) further comprises a hydrophobic layer (1014) located farther away from the substrate (100) than the plurality of nanoparticles (1010) to the substrate (100), a thickness of the hydrophobic layer (1014) is T, and the following condition is satisfied:

$$10 \text{ nm} < T < 50 \text{ nm.}$$

10. The optical component (10) of claim 9, further comprising an adhesive (102) disposed on the surface (S1) of the substrate (100), wherein the adhesive (102) is located farther away from the substrate (100) than the hydrophobic layer (1014) to the substrate (100).

11. The optical component (10) of claim 1, wherein a main component of the plurality of nanoparticles (1010) is one of SiOz, $TiO_2$ and $Al_2O_3$.

12. An optical component (10) comprising:

a substrate (100); and
a low reflection layer (101) disposed on a surface (S1) of the substrate (100), and the low reflection layer (101) comprising:
a plurality of nanoparticles (1010) arranged in a stack configuration, and a number of the plurality of nanoparticles (1010) decreasing progressively in a direction away from the substrate (100);
wherein a scanning electron microscope is used to capture an image of the low reflection layer (101) from a top view perspective, the scanning electron microscope captures an area ranging from 1 $\mu m^2$ to 2000 $\mu m^2$ of the low reflection layer (101), a number of pixels in the image with grayscale values ranging from 100 to 150 is G1015, a number of pixels in the image with grayscale values ranging from 200 to 250 is G2025, and the following condition is satisfied:

$$3 < G1015/G2025 < 40.$$

13. The optical component (10) of claim 12, wherein an average particle diameter of the plurality of nanoparticles (1010) is φavg, and the following condition is satisfied:

$$50 \text{ nm} < \varphi avg < 185 \text{ nm.}$$

14. The optical component (10) of claim 13, wherein the average particle diameter of the plurality of nanoparticles (1010) is φavg, and the following condition is satisfied:

$$60 \text{ nm} < \varphi avg < 120 \text{ nm.}$$

15. The optical component (10) of claim 12, wherein the scanning electron microscope captures an area ranging from 4 $\mu m^2$ to 130 $\mu m^2$ of the low reflection layer (101).

16. The optical component (10) of claim 12, wherein the number of pixels in the image with grayscale values ranging from 100 to 150 is G1015, the number of pixels in the image with grayscale values ranging from 200 to 250 is G2025, and the following condition is satisfied:

$$9 < G1015/G2025 < 27.$$

17. The optical component (10) of claim 12, wherein a thickness of the low reflection layer (101) has variations in height, a height difference of the thickness of the low reflection layer (101) is D, and the following condition is satisfied:

$$120 \text{ nm} < D < 650 \text{ nm.}$$

18. The optical component (10) of claim 17, wherein the height difference of the thickness of the low reflection layer (101) is D, and the following condition is satisfied:

$$200 \text{ nm} < D < 450 \text{ nm}.$$

19. The optical component (10) of claim 17, wherein the low reflection layer (101) further comprises an intermediate layer (1012) disposed between the substrate (100) and the plurality of nanoparticles (1010), and a thickness of the intermediate layer (1012) has variations in height.

20. The optical component (10) of claim 12, wherein a water contact angle of the surface (S1) of the substrate (100) is $\theta$, and the following condition is satisfied:

$$90 \text{ degrees} < \theta < 130 \text{ degrees}.$$

21. The optical component (10) of claim 20, wherein the low reflection layer (101) further comprises a hydrophobic layer (1014) located farther away from the substrate (100) than the plurality of nanoparticles (1010) to the substrate (100), a thickness of the hydrophobic layer (1014) is T, and the following condition is satisfied:

$$10 \text{ nm} < T < 50 \text{ nm}.$$

22. The optical component (10) of claim 21, further comprising an adhesive (102) disposed on the surface (S1) of the substrate (100), wherein the adhesive (102) is located farther away from the substrate (100) than the hydrophobic layer (1014) to the substrate (100).

23. The optical component (10) of claim 12, wherein a main component of the plurality of nanoparticles (1010) is one of SiOz, $TiO_2$ and $Al_2O_3$.

24. An imaging lens (1) comprising:
the optical component (10) of claim 12, wherein an optical axis (OL) of the imaging lens (1) passes through the optical component (10).

25. The imaging lens (1) of claim 24, wherein the surface (S1) of the substrate (100) is located at an object-side end of the optical component (10).

26. An electronic device (4) comprising:

the imaging lens (1) of claim 24; and
an image sensor disposed on an image surface (IMG) of the imaging lens (1).

**FIG. 1**

# FIG. 2

FIG. 3

FIG. 4

EP 4 488 725 A1

FIG. 5

FIG. 6

FIG. 7

EP 4 488 725 A1

EP 4 488 725 A1

FIG. 8

EP 4 488 725 A1

FIG. 9

FIG. 10

FIG. 11

FIG. 12

FIG. 13

EP 4 488 725 A1

EP 4 488 725 A1

FIG. 14

27

FIG. 15

FIG. 16

FIG. 17

FIG. 18

40°~90°

60

FIG. 19

FIG. 20

FIG. 21

FIG. 22

FIG. 23

FIG. 24

FIG. 25

FIG. 26

FIG. 27

FIG. 28

FIG. 29

EP 4 488 725 A1

FIG. 30

FIG. 31

FIG. 32

FIG. 33

Europäisches
Patentamt

European
Patent Office

Office européen
des brevets

# EUROPEAN SEARCH REPORT

**Application Number**

EP 24 18 1064

## DOCUMENTS CONSIDERED TO BE RELEVANT

| Category | Citation of document with indication, where appropriate, of relevant passages | Relevant to claim | |
|---|---|---|---|
| X | US 2020/174167 A1 (CHU KUO-CHIANG [TW] ET AL) 4 June 2020 (2020-06-04) | 1-8, 11-20, 23-26 | |
| Y | * paragraphs [0006] - [0104]; figures 1,2,3; tables 1,3,5 * | 9,10,21, 22 | |
| | ----- | | |
| X | US 2016/178806 A1 (TAKEI AKIKO [JP] ET AL) 23 June 2016 (2016-06-23) | 1,12 | |
| Y | * paragraphs [0103] - [0144]; figure 6 * | 9,10,21, 22 | |
| | ----- | | |

**CLASSIFICATION OF THE APPLICATION (IPC)**

INV.
G02B1/118

**TECHNICAL FIELDS SEARCHED (IPC)**

G02B

The present search report has been drawn up for all claims

| Place of search | Date of completion of the search | Examiner |
|---|---|---|
| Munich | 18 November 2024 | Baur, Christoph |

EPO FORM 1503 03.82 (P04C01)

## ANNEX TO THE EUROPEAN SEARCH REPORT
## ON EUROPEAN PATENT APPLICATION NO.

EP 24 18 1064

This annex lists the patent family members relating to the patent documents cited in the above-mentioned European search report.
The members are as contained in the European Patent Office EDP file on
The European Patent Office is in no way liable for these particulars which are merely given for the purpose of information.

18-11-2024

| Patent document cited in search report | | Publication date | Patent family member(s) | | Publication date |
|---|---|---|---|---|---|
| US 2020174167 | A1 | 04-06-2020 | CN | 111257974 A | 09-06-2020 |
| | | | CN | 114647021 A | 21-06-2022 |
| | | | TW | 202022472 A | 16-06-2020 |
| | | | US | 2020174167 A1 | 04-06-2020 |
| | | | US | 2021364674 A1 | 25-11-2021 |
| US 2016178806 | A1 | 23-06-2016 | JP | 2015011164 A | 19-01-2015 |
| | | | US | 2016178806 A1 | 23-06-2016 |
| | | | WO | 2014208279 A1 | 31-12-2014 |

EPO FORM P0459

For more details about this annex : see Official Journal of the European Patent Office, No. 12/82